# EUROPEAN PATENT SPECIFICATION

(11) **EP 2 332 677 B1**
(45) Date of publication and mention of the grant of the patent: **02.11.2016**
(21) Application number: 10193764.7
(22) Date of filing: 06.12.2010
(51) Int. Cl.: B23B 3/26, B23B 31/40

(54) **Lathe**
Drehbank
Tour

(30) Priority: 14.12.2009 IT BO20090799
(43) Date of publication of application: 15.06.2011
(73) Proprietor: SIR MECCANICA S.p.A., 88100 Catanzaro (IT)
(72) Inventor: Siracusa, Rinaldo, 88100 Catanzaro (IT)
(74) Representative: Lanzoni, Luciano

(56) References cited:
- CA-A1- 2 199 071
- FR-A1- 2 528 746
- GB-A- 1 571 634
- US-A- 3 050 313
- US-A- 3 761 008

## Description

This invention relates to a lathe, that is to say, a machine tool for performing operations such as shaping or end flanging, groove cutting, threading and so on.

Prior art lathes are used to machine parts having a central, longitudinal axis of symmetry. Lathes usually comprise a bed having a first and a second end. A drive head is connected to the bed at the first end, and the part to be worked, or workpiece, is fixed to the drive head. More specifically, the drive head is fitted with a self-centring chuck for fixing the part to be worked.

A support (also known as tailstock) is connected to the bed at the second end. In other words, the workpiece is connected to the machine through the self-centring chuck and the tailstock.

Lathes also comprise a first motor which, through first transmission means, rotationally drive the drive head and thus the workpiece.

A guide is fixed to the bed and is positioned in parallel with the central, longitudinal axis of symmetry of the workpiece. A carriage movable along the above mentioned guide can be moved by hand by an operator using a handwheel. Alternatively, the carriage can be moved along the guide by a second electric motor, if necessary through second transmission means. That way, the carriage moves while the part to be worked, or workpiece, is rotated at a constant speed.

Lathes also comprise a tool connected to the carriage and operating on the workpiece to remove material from the workpiece in order to perform the lathe operation.

Prior art lathes have major disadvantages. In particular, in the event of maintenance on functioning machines, it is necessary to remove the part to be worked from the machine to place it on the lathe and fix it on the clamp. This operation may be lengthy and complicated or, in some cases, impossible. Furthermore, prior art lathes require the part to be worked, or workpiece, to be clamped at two ends which must be accessed. Access may, however, be impossible if the part to be worked is, for example, fitted to a wall or partly embedded in cement.

There are also prior art lathe which are specifically designed for a precise machining, as for example in document CA-2199071, which shows the features of the preamble of claim 1.

In this context, the technical purpose which forms the basis of this invention is to propose a lathe which overcomes the above mentioned disadvantages. More specifically, this invention has for an aim to provide a lathe that can be used to machine unmovable parts.

Another aim of the invention is to provide a lathe that can be used to machine tubular parts that are accessible only at one end.

The technical purpose and aims specified are substantially achieved by a lathe comprising the technical features described in claim 1.

Further features and advantages of this invention are more apparent in the description below, with reference to a lathe as illustrated in the accompanying drawings, in which:
- Figure 1 is a perspective view of the lathe according to this invention;
- Figure 2 is a perspective view of the lathe of Figure 1, with some parts cut away in order to better illustrate others;

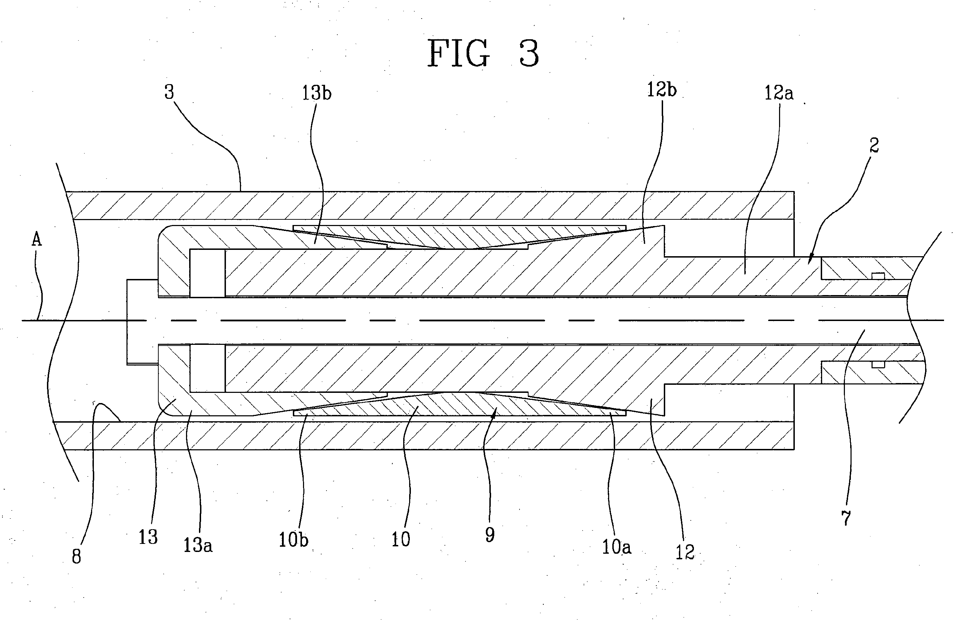

- Figures 3 and 4 are cross sections of a detail of the lathe of Figures 1 and 2 in a rest and a working configuration, respectively.

With reference to the accompanying drawings, the numeral 1 denotes in its entirety a lathe according to this invention.

The lathe 1 comprises a clamp 2 fixable to a part to be worked or workpiece 3. A carriage 5 is slidably associated with the clamp 2 in order to slide along a working axis B parallel with a longitudinal axis A of the workpiece 3. Preferably, a motor 4 is connected to the clamp 2 and operates on the carriage 5 in order to cause the carriage 5 to slide relative to the clamp 2.

A tool holder head 6 is slidably associated with the carriage 5 in such a way that the tool holder head 6 is slidable as one with the carriage 5 along the working axis B. The tool holder head 6 is also rotatable relative to the carriage 5 to rotate about the working axis B.

More specifically, the tool holder head 6 is connected to a rotary member 35 and rotates with the latter. The rotary member 35 is connected to the carriage 5 and rotates relative to the latter about the working axis B.

Further, the tool holder head 6 is slidably associated with the rotary member 35 in such a way as to slide towards and away from the working axis B.

In other words, the tool holder head 6 is able to slide in parallel with the working axis B as one with the carriage 5, to rotate about the working axis B as one with the rotary member 35 and to translate in a direction perpendicular to the working axis B thanks to the sliding coupling to the rotary member 35.

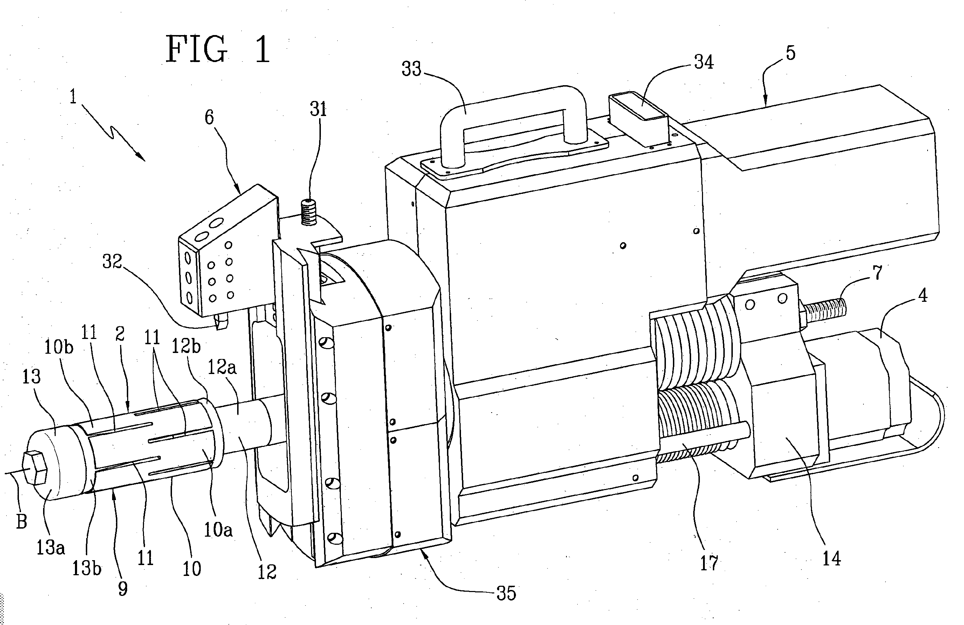

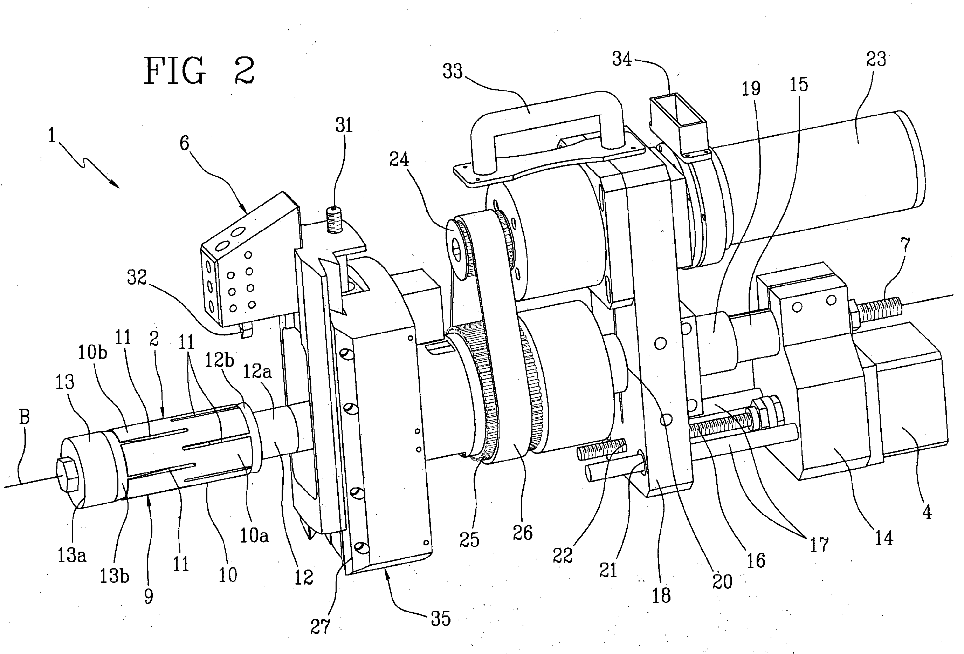

The clamp 2 comprises a rod 7 insertable into a cavity 8 of the workpiece 3. More specifically, a longitudinal axis of principal extension of the rod 7 coincides with the longitudinal axis A of the workpiece 3. More in detail, the rod 7 is preferably made of metal and has threading along a portion of its length. With reference to Figure 1 and 2 in particular, it should be noticed that the rod 7 passes through and is visible in the proximity of the motor 4.

The clamp 2 further comprises a locking member 9 that is connected to the rod 7 and locks to an inside surface of the cavity 8. The locking member 9 comprises a tubular gripping element 10 preferably coaxial with the rod 7.

In the preferred embodiment, the tubular gripping element 10 is cylindrical in shape and preferably hollow.

The tubular gripping element 10 can be switched between a rest configuration and a working configuration. More specifically, the gripping element 10 deforms radially away from the rod 7 to change from the rest configuration to the working configuration in order to hold the workpiece 3 on the clamp 2. Advantageously, that makes it possible to lock in place a tubular element constituting a workpiece 3 in order to perform a lathe operation on it.

The gripping element 10 also has on a side wall of it a plurality of slots 11. More specifically, the slots 11 are preferably rectilinear and arranged in parallel with a central axis of the gripping element 10. Each slot 11 extends from a circular intermediate section of the gripping element 10 to a first or a second circular end section of the gripping element 10. By circular end section is meant a section of the gripping element 10 perpendicular to the central axis of the gripping element 10 and located at a first or a second end of it. By circular intermediate section is meant a section of the gripping element 10 perpendicular to the central axis of the gripping element and equidistant from the first and second circular end sections.

More in detail, the slots 11 extend between the circular intermediate section of the gripping element 10 and the first or the second circular end section, alternately. The purpose of the slots 11 is to facilitate elastic deformation of the gripping element 10 radially away from the working axis B. More specifically, the elastic deformation of a first end portion 10a and of a second end portion 10b of the gripping element 10 allows the latter to switch from the rest configuration to the working configuration.

In other words, in the working configuration, the end portions 10a, 10b of the gripping element 10 may expand and come into contact with the inside surface of the cavity 8 in such a way as to lock the gripping element 10 to the workpiece 3.

The locking member 9 also comprises a wedge 12 which is slidable coaxially on the rod 7. The wedge 12 comprises a cylindrical portion 12a which is insertable into cavity of the workpiece 3. The wedge 12 also comprises a conical ring 12b which is located on and coaxial with, the cylindrical portion 12a, and which is designed to be inserted into the gripping element 10 in such a way as to widen the latter's first end portion 10a, thereby gripping the inside surface of the cavity 8. In other words, the wedge 12 elastically deforms the gripping element 10 and makes it change from the rest configuration to the working configuration.

In the preferred embodiment of it, the lathe 1 comprises a further wedge 13. The further wedge 13 comprises a cylindrical portion 13a, preferably with a conical portion 13b fixed to the end of it. The conical portion 13b is insertable into the second end portion 10b of the gripping element 10 in order to widen it so as to grip the inside surface of the cavity 8.

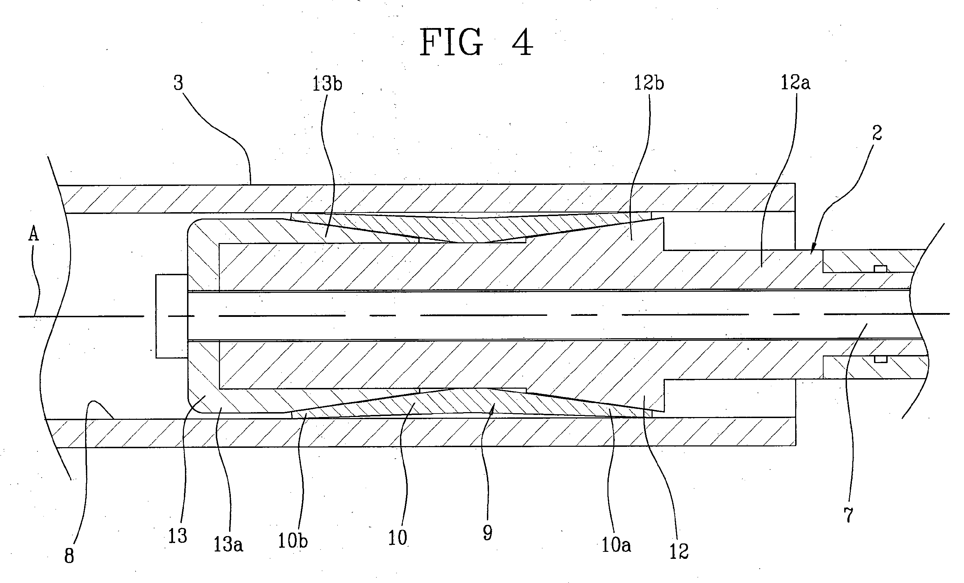

With reference in particular to Figure 4, the further wedge 13 is hollow so that the cylindrical portion 12a of the wedge 12 can be inserted into it in the working configuration.

As described above, the size of the clamp 2 is such that it can be inserted into the cavity of the workpiece 3. Advantageously, the clamp 2 is removably connected to the motor 4 so it can be substituted with a different size clamp 2 according to the size of the cavity of the workpiece 3.

The lathe 1 also comprises a support 14 connected to the clamp 2 through a connecting bar 15. More specifically, the connecting bar 15 is connected to the rod 7. The carriage 5 is slidable on the connecting bar 15, which advantageously serves as a rail. In the preferred embodiment, the connecting bar 15 is cylindrical.

The motor 4 is preferably mounted on the support 14. More specifically, the motor 4 translationally drives the carriage 5 along the rod 7 of the clamp 2.

More in detail, the motor 4 operates on the carriage 5 through a lead screw 16, as described below.

Two further connecting bars 17 are also connected to the support 14. These further bars 17 are insertable into the carriage 5 in order to lock a portion of the carriage 5 and prevent it from rotating about the rod 7. In other words, the further bars 17 are fixed to the support 14 and the carriage 5 slides relative to them.

The carriage 5 comprises a supporting element 18 which is slidable relative to the connecting bar 15. More specifically, a tube 19 is fixed to the supporting element 18 and is preferably coaxial with the connecting bar 15. More in detail, the tube 19 is inserted in the supporting element 18 via a through hole 20.

The two further bars 17 are inserted in two further through holes 21. The further bars 17 slide in the further holes 21 to allow the supporting element 18 to move along an axis of the connecting bar 15. The lead screw 16, connected to the motor 4, screws into the supporting element 18. More specifically, the lead screw 16 operates on a thread made in a through opening 22 in the supporting element 18.

A further motor 23 is connected to the supporting element 18 for rotationally driving the rotary member 35. More specifically, the further motor 23 is fixed to the supporting element 18. The further motor 23 rotationally drives a first pulley 24, preferably a toothed pulley. A second pulley 25, preferably a toothed pulley, is coaxial with the tube 19. The second pulley 25 is connected to the tube 19 by means of bearings which allow rotation relative to it. A belt 26, preferably a toothed belt, connects the first pulley 24 to the second pulley 25. Further, the first pulley 24 is preferably smaller in diameter than the second pulley 25, so as to reduce the speed of rotation of the rotary member 35 relative to the speed of rotation of the further motor 23.

The rotary member 35 is slidable along the rod 7 of the clamp 2. More specifically, the rotary member 35 is connected to the carriage 5, and is pulled by the latter as the latter moves along the rod 7.

The rotary member 35 is also rotatable about the rod 7 relative to the carriage 5. More specifically, the rotary member 35 is coaxial with the longitudinal axis of principal extension of the rod 7. The rotary member 35 is also connected to the second pulley 25 in order to be rotationally driven.

The rotary member 35 also comprises a guide 27 for connecting the tool holder head 6 to it. The guide 27 lies in a plane perpendicular to an axis of rotation of the rotary member 35. Further, the guide 27 is integral with the second pulley 25. That way, the second pulley 25 rotationally drives the tool holder head 6 mounted on the guide 27.

The rotary member 35 also comprises a feed motor (not illustrated) to control the movement of the tool holder head 6 along the guide 27. More specifically, the feed motor rotationally drives the lead screw which moves the tool holder head 6. More in detail, the lead screw operates on a toothed portion of a cylindrical element (not illustrated). The cylindrical element is hollow and preferably threaded internally in such a way as to screw onto an operating rod 31. The operating rod 31 is integral with the tool holder head 6 and is preferably threaded externally so as to allow the cylindrical element to be screwed onto its lateral surface.

Moreover, since the tool holder head 6 is integral with the rotary member 35, it rotates about the longitudinal axis A of the workpiece 3.

The tool holder head 6 is slidably constrained to the rotary member 35. More specifically, the tool holder head 6 is slidably constrained to the guide 27. More in detail, the guide 27 allows the tool holder head 6 to move in a radial direction, that is to say, a direction perpendicular to the working axis B. In other words, the tool holder head 6 is movable towards and away from the longitudinal axis A of the workpiece 3.

Advantageously, the combination of the translational motion of the tool holder head 6 with the rotational motion of the rotary member 35 makes it possible to perform the lathe operation.

The lathe 1 also comprises a tool 32 operatively associated with the tool holder head 6. In use, the tool 32 operates on the workpiece 3 in such a way as to perform the lathe operation. More specifically, the lathe 1 comprises a plurality of tools 32. Each of the tools 32 is connectable to the tool holder head 6 to perform a specific machine operation.

The lathe 1 comprises a handle 33 connected to the carriage 5 so as to allow an operator to easily transport the lathe 1.

Further, a control unit can be connected to the lathe 1, preferably through a port 34 on the carriage 5. More specifically, the control unit controls motor 4 drive for carriage 5 feed along the longitudinal axis A of the workpiece 3. The control unit also controls the drive of the further motor 23 for rotation of the rotary member 35 about the longitudinal axis A of the workpiece 3. For feed motor drive, the control unit controls the distance of the tool holder head 6 from the longitudinal axis A of the workpiece 3.

This invention thus achieves the preset aims. In particular, since the lathe comprises a tool holder head that can rotate around the workpiece, the latter need not be rotationally driven. That means that even parts which are impossible to move can be machined with the lathe.

Moreover, the lathe according to the invention features a gripping element which can lock to the inside of a cavity in the workpiece. That means the workpiece can be clamped at one end only and that the lathe operation can be performed on it even if the other end of it is not accessible.

## Claims

1. A lathe comprising:
- a carriage (5),
- a tool holder head (6), rotatably associated with the carriage (5) to rotate about a working axis (B), parallel with a longitudinal axis (A) of a workpiece (3), the tool holder head (6) being movable towards and away from the working axis (B), the lathe comprises a clamp (2) fixable to the workpiece (3), **characterized in that** the clamp (2) comprises a rod (7) insertable into a cavity (8) of the workpiece (3), the clamp (2) further comprising a locking member (9) that is connected to the rod (7) and locks to an inside surface of the cavity (8), wherein the carriage (5) is slidably associated with the clamp (2) in order to slide along the working axis (B).

2. The lathe according to claim 1, **characterized in that** the locking member (9) comprises a tubular gripping element (10) coaxial with the rod (7) and able to be switched between a rest configuration and a working configuration, the gripping element (10) being deformable radially away from the rod (7) to change from the rest configuration to the working configuration in order to hold the workpiece (3) on the clamp (2).

3. The lathe according to claim 2, **characterized in that** the locking member (9) comprises at least one wedge (12) slidable on the rod (7) and insertable into the gripping element (10) in such a way as to deform it elastically and cause it to change from the rest configuration to the working configuration.

4. The lathe according to any of the claims from 1 to 3, **characterized in that** the tool holder head (6) is slidably constrained to a rotary member (35) that can rotate around the rod (7) relative to the carriage (5).

5. The lathe according to claim 4, **characterized in that** the rotary member (35) can slide along the rod (7).

6. The lathe according to any of the claims from 1 to 5, **characterized in that** it comprises a motor (4) operating on the carriage (5) in order to move the latter along the rod (7).

7. The lathe according to claim 6, **characterized in that** the clamp (2) is removably attached to the motor (4) so that it can be substituted with another clamp (2).

8. The lathe according to any of the foregoing claims, **characterized in that** it comprises a handle (33) connected to the carriage (5) and used to transport the lathe (1).

9. The lathe according to any of the foregoing claims, **characterized in that** it comprises a plurality of tools (32), each connectable to the tool holder (6) in order to perform a respective machining operation.

## Patentansprüche

1. Drehbank, umfassend:
- einen Wagen (5);
- einen Werkzeughalterkopf (6), der drehbar mit dem Wagen (5) assoziiert ist, um sich um eine Arbeitsachse (B) zu drehen, die parallel zu einer Längsachse (A) eines Werkstücks (3) angeordnet ist, wobei der Werkzeughalterkopf (6) hinführend zu und wegführend von der Arbeitsachse (B) bewegbar ist, wobei die Drehbank eine Spanneinrichtung (2) umfasst, die am Werkstück (3) fixierbar ist, **dadurch gekennzeichnet, dass** die Spanneinrichtung (2) eine Stange (7) umfasst, die in einen Hohlraum (8) des Werkstücks (3) einsetzbar ist, wobei die Spanneinrichtung (2) zudem ein Verriegelungselement (9) umfasst, das mit der Stange (7) verbunden ist und zu einer Innenoberfläche des Hohlraums (8) verriegelt, wobei der Wagen (5) assoziiert mit der Spanneinrichtung (2) verschiebbar ist, um sich entlang der Arbeitsachse (B) zu verschieben.

2. Drehbank nach Anspruch 1, **dadurch gekennzeichnet, dass** das Verriegelungselement (9) ein rohrförmiges Greifelement (10) umfasst, das koaxial zur Stange (7) angeordnet und in der Lage ist, zwischen einer Ruhekonfiguration und eine Arbeitskonfiguration umgeschaltet zu werden, wobei das Greifelement (10) radial wegführend von der Stange (7) verformbar ist, um von der Ruhekonfiguration in die Arbeitskonfiguration zu wechseln, um das Werkstück (3) auf der Spanneinrichtung (2) zu halten.

3. Drehbank nach Anspruch 2, **dadurch gekennzeichnet, dass** das Verriegelungselement (9) mindestens einen Keil (12) umfasst, der auf der Stange (7) verschiebbar und in das Greifelement (10) einsetzbar ist, sodass dieses elastisch verformt wird und von der Ruhekonfiguration in die Arbeitskonfiguration wechselt.

4. Drehbank nach einem der Ansprüche 1 bis 3, **dadurch gekennzeichnet, dass** der Werkzeughalterkopf (6) fest verbunden mit einem Drehelement (35) verschiebbar ist, das sich rund um die Stange (7) relativ zum Wagen (5) drehen kann.

5. Drehbank nach Anspruch 4, **dadurch gekennzeichnet, dass** das Drehelement (35) entlang der Stange (7) verschoben werden kann.

6. Drehbank nach einem der Ansprüche 1 bis 5, **dadurch gekennzeichnet, dass** es einen Motor (4) umfasst, der auf den Wagen (5) wirkt, um diesen entlang der Stange (7) zu bewegen.

7. Drehbank nach Anspruch 6, **dadurch gekennzeichnet, dass** die Spanneinrichtung (2) entfernbar am Motor (4) angebracht ist, sodass sie durch eine andere Spanneinrichtung (2) ersetzt werden kann.

8. Drehbank nach einem der vorhergehenden Ansprüche, **dadurch gekennzeichnet, dass** sie einen Griff (33) umfasst, der mit dem Wagen (5) verbunden ist und verwendet wird, um die Drehbank (1) zu transportieren.

9. Drehbank nach einem der vorhergehenden Ansprüche, **dadurch gekennzeichnet, dass** sie eine Vielzahl an Werkzeugen (32) umfasst, die jeweils mit dem Werkzeughalter (6) verbunden werden können, um einen jeweiligen Bearbeitungsvorgang durchzuführen.

## Revendications

1. Tour comprenant :
- un chariot (5),
- une tête porte-outil (6) associée en rotation au chariot (5) pour pivoter autour d'un axe de travail (B) parallèle à un axe longitudinal (A) d'une pièce d'usinage (3), la tête porte-outil (6) pouvant se rapprocher ou s'éloigner de l'axe de travail (B), le tour comprend une pince (2) pouvant se fixer à la pièce d'usinage (3), **caractérisé en ce que** la pince (2) comprend une tige (7) pouvant s'insérer dans une cavité (8) de la pièce d'usinage (3), la pince (2) comprenant de plus un organe de verrouillage (9) étant relié à la tige (7) et qui se verrouille à une surface interne de la cavité (8), dans lequel le chariot (5) est associé de façon coulissante à la pince (2) afin de coulisser le long de l'axe de travail (B).

2. Tour selon la revendication 1, **caractérisé en ce que** l'organe de verrouillage (9) comprend un élément de préhension tubulaire (10) coaxial à la tige (7) et pouvant commuter entre une configuration de repos et une configuration de travail, l'élément de préhension (10) étant déformable radialement en s'éloignant de la tige (7) pour passer de la configuration de repos à la configuration de travail afin de maintenir la pièce d'usinage (3) sur la pince (2).

3. Tour selon la revendication 2, **caractérisé en ce que** l'organe de verrouillage (9) comprend au moins un coin (12) pouvant coulisser sur la tige (7) et pouvant s'insérer dans l'élément de préhension (10) de manière à le déformer élastiquement et à provoquer son passage de la configuration de repos à la configuration de travail.

4. Tour selon l'une quelconque des revendications de 1 à 3, **caractérisé en ce que** la tête porte-outil (6) est solidaire de façon coulissante d'un organe rotatif (35) qui peut tourner autour de la tige (7) par rapport au chariot (5).

5. Tour selon la revendication 4, **caractérisé en ce que** l'organe rotatif (35) peut coulisser le long de la tige (7).

6. Tour selon l'une quelconque des revendications de 1 à 5, **caractérisé en ce qu'**il comprend un moteur (4) opérant sur le chariot (5) afin de déplacer ce dernier le long de la tige (7).

7. Tour selon la revendication 6, **caractérisé en ce que** la pince (2) est fixée de façon amovible au moteur (4) de manière à ce qu'elle puisse être remplacée par une autre pince (2).

8. Tour selon l'une quelconque des revendications précédentes, **caractérisé en ce qu'**il comprend une poignée (33) reliée au chariot (5) et utilisée pour transporter le tour (1).

9. Tour selon l'une quelconque des revendications précédentes, **caractérisé en ce qu'**il comprend une pluralité d'outils (32), chacun pouvant être relié au porte-outil (6) afin d'effectuer une opération d'usinage correspondante.
